# EUROPÄISCHE PATENTSCHRIFT

(11) **EP 3 384 575 B1**
(45) Veröffentlichungstag und Bekanntmachung des Hinweises auf die Patenterteilung: **17.03.2021**
(21) Anmeldenummer: 16826317.6
(22) Anmeldetag: 21.12.2016
(51) Int. Cl.: H02J 1/14, H02J 3/12

(54) **VERFAHREN UND ANORDNUNG ZUR STEUERUNG EINES ENERGIENETZES**
METHOD AND ARRANGEMENT FOR CONTROLLING AN ENERGY NETWORK
PROCÉDÉ ET DISPOSITIF DE COMMANDE D'UN RÉSEAU D'ÉNERGIE

(30) Priorität: 29.01.2016 DE 102016201372
(43) Veröffentlichungstag der Anmeldung: 10.10.2018
(73) Patentinhaber: Siemens Mobility GmbH, 81739 München (DE)
(72) Erfinder: HERGENHAN, Christoph, 97645 Ostheim vor der Rhoen OT Urspringen (DE); GREIF, Tomas, 91341 Röttenbach (DE)
(86) Internationale Anmeldenummer: PCT/EP2016/082079
(87) Internationale Veröffentlichungsnummer: WO 2017/129329

(56) Entgegenhaltungen:
- DE-A1-102011 013 609

## Beschreibung

Die Erfindung betrifft ein Verfahren und eine Anordnung zur Steuerung eines Energienetzes, das beispielsweise ein Gleichstrombahnenergienetz sein kann. Ein Verfahren zur Stromversorgung ist aus der DE 10 2011 013 609 A1 bekannt. Das Energienetz wird aus einem übergeordneten Versorgungsnetz eines Energieversorgers gespeist. Um die Stabilität des Versorgungsnetzes nicht zu gefährden, lassen Energieversorger es oft nicht zu beziehungsweise schließen dies in ihren Energieversorgungsverträgen explizit aus, dass Energie aus dem untergeordneten Energienetz in das übergeordnete Versorgungsnetz zurückgespeist wird. Daher setzen Bahnbetreiber in ihren Energienetzen häufig keine Rückspeiseeinheiten, wie Photovoltaikanlagen, Rückspeisung von Bremsenergie der Fahrzeuge, etc., ein, da sie nur schwer sicherstellen können, dass keine Energie vom Energienetz in das externe Versorgungsnetz des Energieversorgers zurückgespeist wird. Zwar kann die Rückspeisung von Energie in das übergeordnete Versorgungnetz durch eine entsprechende Parametrierung eines Leistungsschalters am Übergabepunkt ausgeschlossen werden. Diese Parametrierung bewirkt, dass bei einer möglichen Rückspeisung von Energie aus dem Energienetz in das Versorgungsnetz der Leistungsschalter geöffnet wird. Dies hat allerdings den Nachteil, dass sämtliche Verbraucher im Energienetz, wie beispielsweise Klimaanlagen, Beleuchtung, etc., vom übergeordneten Versorgungsnetz getrennt sind und für einen gewissen Zeitraum nicht mit Energie versorgt werden. Da dies nicht zu tolerierende Nachteile hätte, ist diese Möglichkeit nicht praktikabel.

Es ist daher die Aufgabe der vorliegenden Erfindung, ein Verfahren und eine Anordnung zur Steuerung eines Energienetzes bereitzustellen, durch das die Rückspeisung von Energie in das externe Versorgungsnetz trotz des Einsatzes von Rückspeiseeinheiten auf sinnvolle Weise vermieden werden kann.

Diese Aufgabe wird gelöst durch ein Verfahren zur Steuerung eines Energienetzes gemäß Anspruch 1 und durch eine Anordnung zur Steuerung eines Energienetzes gemäß Anspruch 6.

Die erfindungsgemäße Lösung hat den Vorteil, dass durch sie eine Rückspeisung von Energie in das übergeordnete Versorgungsnetz trotz einem Einsatz von Rückspeiseeinheiten auf einfache Weise zu vermeiden ist. Weiterhin ist mit der erfindungsgemäßen Lösung eine Abschaltung des Energienetzes vom Versorgungsnetz bei drohender Rückspeisung überflüssig, so dass das Energienetz und alle darin enthaltenen Verbraucher kontinuierlich mit Energie versorgt werden. Somit ist es durch die erfindungsgemäße Lösung möglich, beliebige Rückspeiseeinheiten im Energienetz einzusetzen und trotzdem das strenge Rückspeisungsverbot des Energieversorgers und Betreibers des externen Versorgungsnetzes einzuhalten.

Die erfindungsgemäße Lösung nutzt beispielsweise eine weiterentwickelte Leittechnik, die frühzeitig eine drohende Rückspeisung von Energie in das Versorgungsnetz erkennt und diese durch das automatische Einleiten von Gegenmaßnahmen vermeidet. Dazu wird beispielsweise die aus dem Versorgungsnetz an einem Übergabepunkt bezogene Leistung oder Energie erfasst. Die Gegenmaßnahmen zur Vermeidung einer Rückspeisung können beispielsweise starten, wenn die aus dem Versorgungsnetz bezogene Leistung oder Energie beziehungsweise die aus der Leistung berechnete Energiemenge einen vorbestimmten Wert unterschreitet.

Der Einfachheit halber wird hier teilweise von Energie gesprochen, wohlwissend, dass diese physikalisch nicht direkt gemessen wird. Gemessen werden Strom und Spannung, woraus sich die Leistung ergibt und ein Energieverbrauch berechnet werden kann.

Die erfindungsgemäße Lösung kann durch vorteilhafte Ausgestaltungen weiterentwickelt werden, die im Folgenden einzeln beschrieben sind. Diese Ausgestaltungen können gegebenenfalls miteinander kombiniert werden.

So kann zum Beeinflussen der Energiemenge eine von wenigstens einer Rückspeiseeinheit in das Energienetz rückgespeiste Energiemenge reduziert werden. Dies hat den Vorteil, dass weniger Energie im Energienetz erzeugt wird und dadurch der Anteil der verbrauchten Energie gegenüber der erzeugten Energie im Energienetz steigt und dadurch die Gefahr einer Rückspeisung von Energie in das Versorgungsnetz reduziert wird.

Um die Rückspeiseeinheiten im Energienetz anzusteuern, wird erfindungsgemäß wenigstens ein Blockierungssignal an die wenigstens eine Rückspeiseeinheit ausgegeben, durch das die Rückspeiseeinheit die Rückspeisung von Energie in das Energienetz stoppt. Ferner kann das Ausgeben des Blockierungssignals durch Erreichen oder Unterschreiten eines Blockierungssignalgrenzwerts automatisch ausgelöst werden. So kann die Rückspeiseeinheit automatisch und schnell gestoppt werden, wenn eine Rückspeisung von Energie in das Versorgungsnetz droht.

Weiterhin wird alternativ oder zusätzlich erfindungsgemäß wenigstens ein Begrenzungssignal an die wenigstens eine Rückspeiseeinheit ausgegeben, durch das die Rückspeiseeinheit die Rückspeisung von Energie in das Energienetz reduziert. Im Gegensatz zum oben genannten Blockierungssignal wird durch das Begrenzungssignal die erzeugte Energiemenge lediglich reduziert und somit die erzeugte Energiemenge nicht komplett gestoppt. Ferner kann das Ausgeben des Begrenzungssignals durch Erreichen oder Unterschreiten eines Begrenzungssignalgrenzwerts automatisch ausgelöst werden.

In einer vorteilhaften Weiterbildung kann zum Beeinflussen der Energiemenge der Energieverbrauch von wenigstens einem im Energienetz vorhandenen Energieverbraucher erhöht werden. Dies hat den Vorteil, dass durch Erhöhen des Verbrauchs im Energienetz ebenfalls der Anteil der erzeugten Energie gegenüber der verbrauchten Energie reduziert wird und dadurch eine Rückspeisung von Energie in das Versorgungsnetz vermieden wird.

Um beim Betreiben des Energienetzes möglichst nahe an die Grenze der Rückspeisung gehen zu können und sehr kurzzeitige Rückstromspitzen vermeiden zu können, kann ein Energieverbrauch der Verbraucher im Energienetz ermittelt werden und unter Berücksichtigung des Energieverbrauchs ein maximal zulässiger Rückspeiseenergiewert für die Rückspeiseeinheiten berechnet werden. Diese an die Rückspeiseeinheiten übermittelte Rückspeiseenergiewert kann dann individuell von den Rückspeiseeinheiten als Grenzwert genommen und eingehalten werden.

In der erfindungsgemäßen Anordnung ist die Steuereinrichtung zur Kommunikation mit wenigstens einer Rückspeiseeinheit und/oder einem Energieverbraucher ausgebildet. Dies hat den Vorteil, dass die Steuereinrichtung Befehle an die Rückspeiseeinheiten und/oder Energieverbraucher des Energienetzes übermitteln kann, um die Rückspeisung von Energie in das externe Versorgungsnetz zu vermeiden.

Ferner ist die Steuereinrichtung erfindungsgemäß zum Übermitteln eines Blockierungssignals und eines Begrenzungssignals an die Rückspeiseeinheit ausgebildet, durch das die rückgespeiste Energie reduziert wird. So kann die Rückspeiseeinheit automatisch beeinflusst werden, falls eine Rückspeisung von Energie in das Versorgungsnetz droht.

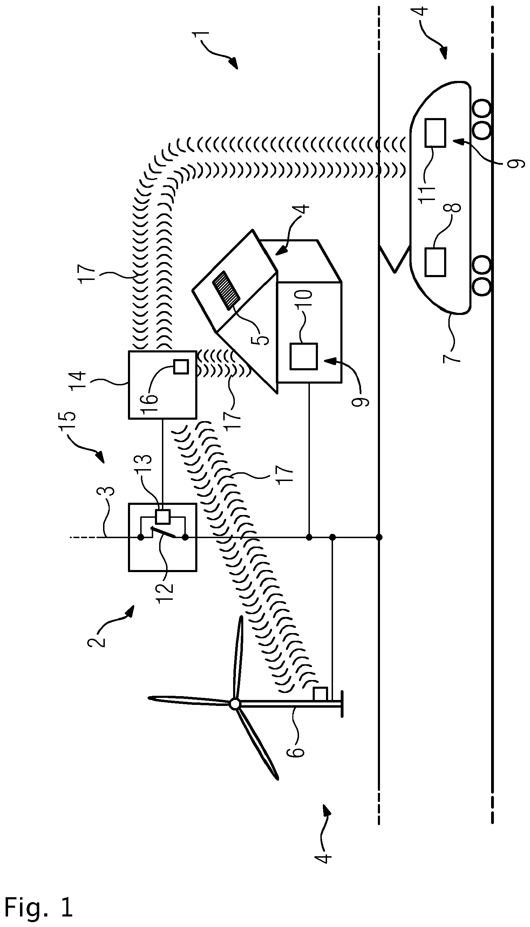

Im Folgenden wird die Erfindung mit Bezug auf die beigefügte Zeichnung erläutert.

Die einzige Figur zeigt eine schematische Darstellung einer beispielhaften Ausführungsform eines erfindungsgemäßen Energienetzes mit der erfindungsgemäßen Anordnung zur Steuerung des Energienetzes.

Die Figur zeigt ein Energienetz 1, das hier beispielsweise als ein Gleichstrombahnenergienetz ausgebildet ist. Alternativ könnte das Energienetz auch ein Wechselstromnetz sein und auch beispielsweise alternativ zur Versorgung einer bahntechnischen Anlage zur Versorgung von anderen Fahrzeugen, wie beispielsweise E-Trucks oder elektrischen Omnibussen, dienen. Das Energienetz 1 ist hier nur sehr schematisch dargestellt. Die Details, die bei der Auslegung zum DC- und AC-Netz vorhanden sind, wurden bewusst weggelassen.

Das Energienetz 1 ist an einem Übergabepunkt 2 mit einem externen Versorgungsnetz 3 verbunden, das von einem Energieversorgungsunternehmen betrieben wird. Im Energienetz 1 sind verschiedene Rückspeiseeinheiten 4 vorhanden, wie beispielsweise eine Photovoltaikanlage 5, ein Windrad 6 und ein

Gleichspannungs-/Wechselspannungsinverter 8 in einem Fahrzeug 7, durch den beim Bremsen gewonnene Energie rückgespeist werden kann. Weiterhin sind in dem Energienetz 1 mehrere Energieverbraucher 9 vorhanden, wie eine Gebäudeklimaanlage 10, Rolltreppen, Beleuchtung und ein Traktionsantrieb 11 des Fahrzeugs 7. Selbstverständlich können weitere Rückspeiseeinheiten 4 und Energieverbraucher 9 in dem Energienetz vorhanden sein.

Am Übergabepunkt 2 sind ein Übergabeleistungsschalter 12 und eine Messeinrichtung 13 vorgesehen. Weiterhin ist in dem Energienetz 1 eine Steuereinrichtung 14 vorgesehen, die zusammen mit der Messeinrichtung 13 zur erfindungsgemäßen Anordnung 15 zur Steuerung des Energienetzes 1 gehören. Die Gleichspannungs-/Wechselspannungsinverter 8 in einem Fahrzeug 7, durch den beim Bremsen gewonnene Energie rückgespeist werden kann. Weiterhin sind in dem Energienetz 1 mehrere Energieverbraucher 9 vorhanden, wie eine Gebäudeklimaanlage 10, Rolltreppen, Beleuchtung und ein Traktionsantrieb 11 des Fahrzeugs 7. Selbstverständlich können weitere Rückspeiseein-Steuereinrichtung 14 weist ein Kommunikationsmittel 16 auf, das beispielsweise drahtlose Kommunikationsverbindungen 17 zu den verschiedenen Rückspeiseeinheiten 4 und Energieverbrauchern 9 herstellt.

Der Übergabeleistungsschalter 12 ist zum Trennen der Verbindung zwischen dem Versorgungsnetz 3 und dem Energienetz 1 ausgebildet. Die Messeinrichtung 13 ermittelt die Leistung, die das Energienetz 1 aus dem Versorgungsnetz 3 bezieht beziehungsweise die Energienetz 1 und Versorgungsnetz 3 austauschen. Die Messeinrichtung 13 kann beispielsweise die Einzelverbräuche der angeschlossenen Energieverbraucher 9 oder Rückspeiseeinheiten 4 messen. Zum Beispiel kann die Einspeisung in ein gesamtes Gebäude gemessen werden. Dies kann über eine Strom- und Spannungsmessung geschehen, aus der die Leistung berechnet wird. Auch kann aus der Leistung die Energie berechnet werden, falls nötig. Der Übergabeleistungsschalter 12 trennt die Verbindung zwischen dem Energienetz 1 und dem Versorgungsnetz 3, wenn die Messeinrichtung 13 einen Rückfluss von Energie aus dem Energienetz 1 in das Versorgungsnetz 3 feststellt. Eine solche Rückspeisung von Energie beziehungsweise Leistung in das Versorgungsnetz 3 ist durch den Betreiber des Versorgungsnetzes 3 untersagt und wird mit hohen Strafgebühren geahndet. Daher schaltet der Übergabeleistungsschalter 12 ab, falls ein Rückfluss von Energie in das Versorgungsnetz 3 droht. Ein Abschalten des Leistungsschalters 12 hat allerdings die Folge, dass sämtliche Verbraucher 9 im Energienetz 1 ohne Stromversorgung sind, was problematisch und in jedem Fall zu vermeiden ist.

Durch die erfindungsgemäße Anordnung 15 wird eine Rückspeisung von Energie in das Versorgungsnetz 3 vermieden, so dass der Leistungsschalter 12 in keinem Fall die Verbindung zwischen dem Energienetz 1 und dem Versorgungsnetz 3 trennen muss. Hierfür ermittelt die Messeinrichtung 13 permanent oder in ausreichender Frequenz die aktuell aus dem Versorgungsnetz 3 bezogene Leistung. Dieser Messwert wird von der Messeinrichtung 13 an die Steuereinrichtung 14 übermittelt. Die Messeinrichtung 13 kann beispielsweise in dem Schutzgerät, das sich im Übergabeleistungsschalterfeld befindet, implementiert sein und der Messwert kann automatisch ausgelesen werden. Wenn die aus dem Versorgungsnetz 3 bezogene Leistung sinkt und einen vorher festgelegten Begrenzungssignalgrenzwert erreicht, übermittelt die Steuereinrichtung 14 ein Begrenzungssignal über die Kommunikationsverbindungen 17 an die Rückspeiseeinheiten 4. Durch das empfangene Begrenzungssignal reduzieren die Rückspeiseeinheiten 4 die Energie beziehungsweise Leistung, die sie in das Energienetz 1 rückspeisen. Dadurch wird das Verhältnis innerhalb des Energienetzes 1 zwischen der erzeugten Energie und der verbrauchten Energie beeinflusst und geändert, so dass mehr Energie aus dem Versorgungsnetz 3 bezogen wird und die drohende Rückspeisung von Energie in das Versorgungsnetz 3 abgewendet wird. Das Verhältnis wird durch die Erfindung so beeinflusst, dass der Anteil der rückgespeisten Energie kleiner als der der verbrauchten Energie ist.

Sollte die aus dem Versorgungsnetz 3 bezogene Leistung, die von der Messeinrichtung 13 ermittelt wird, weiter sinken und einen Blockierungssignalgrenzwert erreichen, der unterhalb des Begrenzungssignalgrenzwerts liegt, sendet die Steuereinrichtung 14 ein Blockierungssignal an die Rückspeiseeinheiten 4. Durch das Blockierungssignal stoppen die Rückspeiseeinheiten 4 die Rückspeisung von Energie in das Energienetz 1 komplett. Dadurch kann sehr kurzfristig eine drohende Rückspeisung von Energie in das Versorgungsnetz 3 abgewendet werden.

Als weitere erfindungsgemäße Maßnahme sendet die Steuereinrichtung 14 ein Erhöhungssignal an die Energieverbraucher 9, die ebenfalls mit der Steuereinrichtung 14 über Kommunikationsverbindungen 17 verbunden sind. Das Erhöhungssignal hat zur Folge, dass die Energieverbraucher 9 ihren Energieverbrauch erhöhen und dadurch den gesamten Energieverbrauch in dem Energienetz erhöhen und auch dadurch eine drohende Rückspeisung von Energie in das Versorgungsnetz 3 abwenden. Der Anteil der verbrauchten Energie wird hierdurch größer. Die Steuereinrichtung 14 ist leittechnisch über die Kommunikationsverbindungen 17 mit allen oder allen wesentlichen Rückspeiseeinheiten 4 und Energieverbraucher 9 verbunden.

Alternativ können das Blockierungssignal, das Begrenzungssignal oder das Erhöhungssignal selbstverständlich auch nur an ausgewählte Verbraucher 9 oder Rückspeiseeinheiten 4 gesendet werden.

Ferner kann die Leistung der Verbraucher 9 auch direkt bei den Verbrauchern 9 gemessen werden und an die Steuereinrichtung 14 übermittelt werden, die daraus einen individuellen Grenzwert für jede Rückspeiseeinheit 4 berechnet und an diese übermittelt. So kann jeder Rückspeiseeinheit 4 permanent ein oberer Grenzwert übermittelt werden, den diese selbstständig einhält.

## Patentansprüche

1. Verfahren zur Steuerung eines Energienetzes (1) zur Versorgung von Fahrzeugen, insbesondere eines Gleichstromenergienetzes, bei dem eine von einem externen Versorgungsnetz (3) bezogene Energiemenge erfasst und wenigstens eine im Energienetz (1) eingespeiste und verbrauchte Energiemenge so beeinflusst wird, dass eine Rückspeisung von Energie in das externe Versorgungsnetz (3) vermieden wird, wobei wenigstens ein Begrenzungssignal bei Erreichen oder Unterschreiten eines Begrenzungssignalgrenzwertes der erfassten Energiemenge automatisch an wenigstens eine Rückspeiseeinheit (4) ausgegeben wird, durch das die Rückspeiseeinheit (4) die Rückspeisung von Energie in das Energienetz (1) reduziert und ein Blockierungssignal bei Erreichen oder Unterschreiten eines Blockierungssignalgrenzwertes der erfassten Energiemenge automatisch an die wenigstens eine Rückspeiseeinheit (4) ausgegeben wird, durch das die Rückspeiseeinheit (4) die Rückspeisung von Energie in das Energienetz (1) stoppt, wobei der Blockierungssignalgrenzwert unterhalb des Begrenzungssignalgrenzwerts liegt.

2. Verfahren nach Anspruch 1,
**dadurch gekennzeichnet, dass**
ein Verhältnis zwischen der eingespeisten und verbrauchten Energiemenge so beeinflusst wird, dass der Anteil der rückgespeisten Energie kleiner ist als der Anteil der verbrauchten Energie.

3. Verfahren nach Anspruch 1 oder 2,
**dadurch gekennzeichnet, dass**
zum Beeinflussen der Energiemenge eine von wenigstens einer Rückspeiseeinheit (4) in das Energienetz (1) rückgespeiste Energiemenge reduziert wird.

4. Verfahren nach einem der oben genannten Ansprüche,
**dadurch gekennzeichnet, dass**
zum Beeinflussen der Energiemenge der Energieverbrauch von wenigstens einem im Energienetz vorhandenen Energieverbraucher (9) erhöht wird.

5. Verfahren nach einem der oben genannten Ansprüche,
**dadurch gekennzeichnet, dass**
ein Energieverbrauch der Verbraucher (9) im Energienetz (1) ermittelt wird und unter Berücksichtigung des Energieverbrauchs ein maximal zulässiger Rückspeiseenergiewert für die Rückspeiseeinheiten (4) berechnet wird.

6. Anordnung (15) zur Steuerung eines Energienetzes (1) zur Versorgung von Fahrzeugen, insbesondere eines Gleichstromenergienetzes,
mit wenigstens einer Messeinrichtung (13), die zum Erfassen einer von einem übergeordneten Versorgungsnetz (3) bezogenen Energiemenge ausgebildet ist,
mit wenigstens einer Steuereinrichtung (14), die zum Beeinflussen einer im Energienetz (1) eingespeisten und verbrauchten Energiemenge ausgebildet ist, um eine Rückspeisung von Energie in das externe Versorgungsnetz (3) zu vermeiden, wobei die Steuereinrichtung (14) zur Kommunikation mit wenigstens einer Rückspeiseeinheit (4) und einem Energieverbraucher (9) ausgebildet ist und zum automatischen Übermitteln eines Begrenzungssignals bei Erreichen oder Unterschreiten eines Begrenzungssignalgrenzwertes der erfassten Energiemenge an die wenigstens eine Rückspeiseeinheit (4), durch das die rückgespeiste Energie reduziert wird, ausgebildet ist und zum automatischen Übermitteln eines Blockierungssignals bei Erreichen oder Unterschreiten eines Blockierungssignalgrenzwertes der erfassten Energiemenge an die wenigstens eine Rückspeiseeinheit (4), durch das die rückgespeiste Energie gestoppt wird, ausgebildet ist, wobei der Blockierungssignalgrenzwert unterhalb des Begrenzungssignalgrenzwerts liegt.

7. Anordnung nach Anspruch 6,
**dadurch gekennzeichnet, dass**
die Steuereinrichtung (14) zum Beeinflussen eines Verhältnisses zwischen eingespeister und verbrauchter Energiemenge ausgebildet ist, so dass der Anteil der rückgespeisten Energie kleiner ist als der Anteil der verbrauchten Energie.

## Claims

1. Method for controlling an energy network (1) for supplying vehicles, in particular a DC energy network, in which an amount of energy drawn from an external supply network (3) is recorded and at least one amount of energy that is fed and consumed in the energy network (1) is influenced so that a recovery of energy into the external supply network (3) is avoided, wherein at least one limitation signal is automatically output to at least one energy recovery unit (4) when a limitation signal limit value of the recorded amount of energy is reached or fallen below, by way of which the energy recovery unit (4) reduces the recovery of energy into the energy network (1), and a blocking signal is automatically output to the at least one energy recovery unit (4) when a blocking signal limit value of the recorded amount of energy is reached or fallen below, by way of which the energy recovery unit (4) stops the recovery of energy into the energy network (1), wherein the blocking signal limit value lies below the limitation signal limit value.

2. Method according to claim 1,
**characterised in that**
a relationship between the amount of energy fed and consumed is influenced so that the proportion of recovered energy is lower than the proportion of consumed energy.

3. Method according to claim 1 or 2,
**characterised in that**
in order to influence the amount of energy, an amount of energy recovered into the energy network (1) by at least one energy recovery unit (4) is reduced.

4. Method according to one of the aforementioned claims,
**characterised in that**
in order to influence the amount of energy, the energy consumption of at least one energy consumer (9) present in the energy network is increased.

5. Method according to one of the aforementioned claims,
**characterised in that**
an energy consumption of the consumer (9) in the energy network (1) is ascertained and, taking the energy consumption into consideration, a maximum permissible recovery energy value is calculated for the energy recovery units (4).

6. Arrangement (15) for controlling an energy network (1) for supplying vehicles, in particular a DC energy network,
with at least one measuring facility (13), which is embodied for recording an amount of energy drawn from a high-level supply network (3), with at least one control facility (14), which is embodied for influencing an amount of energy fed and consumed in the energy network (1), in order to avoid energy being recovered into the external supply network (3), wherein the control facility (14) is embodied for communicating with at least one energy recovery unit (4) and an energy consumer (9) and is embodied, when a limitation signal limit value of the recorded amount of energy is reached or fallen below, to automatically transmit a limitation signal to the at least one energy recovery unit (4), by way of which the recovered energy is reduced, and is embodied, when a blocking signal limit value of the recorded amount of energy is reached or fallen below, to automatically transmit a blocking signal to the at least one energy recovery unit (4), by way of which the recovered energy is stopped, wherein the blocking signal limit value lies below the limitation signal limit value.

7. Arrangement according to claim 6,
**characterised in that**
the control facility (14) is embodied for influencing a relationship between the amount of energy fed and consumed, so that the proportion of recovered energy is lower than the proportion of consumed energy.

## Revendications

1. Procédé de commande d'un réseau (1) d'énergie pour l'alimentation de véhicules, notamment d'un réseau d'énergie à courant continu,
dans lequel on relève une quantité d'énergie fournie par un réseau (3) d'alimentation extérieur et
on influence au moins une quantité d'énergie injectée et consommée dans le réseau (1) d'énergie de manière à empêcher une injection en retour d'énergie dans le réseau (3) d'alimentation extérieur, dans lequel, lorsque l'on atteint ou lorsque l'on passe en dessous d'une valeur limite de signal de limitation de la quantité d'énergie relevée on envoie automatiquement à au moins une unité (4) d'injection en retour un signal de limitation, par lequel l'unité (4) d'injection en retour réduit l'injection en retour d'énergie dans le réseau (1) d'énergie et
lorsqu'on atteint ou lorsque l'on passe en dessous d'une valeur limite de signal de blocage de la quantité d'énergie relevée, on envoie automatiquement à la au moins une unité (4) d'injection en retour un signal de blocage, par lequel l'unité (4) d'injection en retour arrête l'injection en retour d'énergie dans le réseau (1) d'énergie, la valeur limite du signal de blocage étant en dessous de la valeur limite du signal de limitation.

2. Procédé suivant la revendication 1,
**caractérisé en ce que**
on influence un rapport entre la quantité d'énergie injectée et consommée de manière à ce que la proportion d'énergie injectée en retour soit plus petite que la proportion d'énergie consommée.

3. Procédé suivant l'une des revendications 1 ou2,
**caractérisé en ce que**
pour influencer la quantité d'énergie, on réduit une quantité d'énergie injectée en retour dans le réseau (1) d'énergie par au moins une unité (4) d'injection en retour.

4. Procédé suivant l'une des revendications mentionnées ci-dessus,
**caractérisé en ce que**
pour influencer la quantité d'énergie, on augmente la consommation d'énergie par au moins un consommateur (9) d'énergie présent dans le réseau d'énergie.

5. Procédé suivant l'une des revendications mentionnées ci-dessus,
**caractérisé en ce que**
on détermine une consommation d'énergie du consommateur (9) dans le réseau (1) d'énergie et, en tenant compte de la consommation d'énergie, on calcule une valeur d'énergie d'injection en retour admissible au maximum pour les unités (4) d'injection en retour.

6. Système (15) de commande d'un réseau (1) d'énergie pour l'alimentation de véhicules, notamment d'un réseau d'énergie à courant continu,
comprenant au moins un dispositif (13) de mesure, qui est constitué pour le relevé d'une quantité d'énergie fournie par un réseau (3) d'alimentation supérieure hiérarchiquement, comprenant au moins un dispositif (14) de commande, qui est constitué pour influencer une quantité d'énergie injectée et consommée dans le réseau (1) d'énergie afin d'empêcher une injection d'énergie en retour dans le réseau (3) d'alimentation extérieure, le dispositif (14) de commande étant constitué pour communiquer avec au moins une unité (4) d'injection en retour et avec un consommateur (9) d'énergie et pour transmettre automatiquement à la au moins une unité (4) d'injection en retour un signal de limitation lorsqu'on atteint ou lorsqu'on passe en dessous d'une valeur limite de signal de limitation de la quantité d'énergie relevée par lequel l'énergie injectée en retour est réduite et
pour la transmission automatique d'un signal de blocage lorsqu'est atteinte ou lorsque l'on passe en dessous d'une valeur limite de signal de blocage de la quantité d'énergie relevée à la au moins une unité (4) d'injection en retour, par lequel l'énergie injectée en retour est arrêtée, la valeur limite du signal de blocage étant en dessous de la valeur limite du signal de limitation.

7. Système suivant la revendication 6,
**caractérisé en ce que**
le dispositif (14) de commande est constitué pour influencer un rapport entre une quantité d'énergie injectée et consommée de manière à ce que la proportion d'énergie injectée en retour soit plus petite que la proportion d'énergie consommée.
